(19) **Europäisches Patentamt**

**European Patent Office**

**Office européen des brevets**

(11) **EP 1 396 472 A2**

(12) **EUROPEAN PATENT APPLICATION**

(43) Date of publication:
**10.03.2004 Bulletin 2004/11**

(51) Int Cl.⁷: **C01B 3/16**, H01M 8/06,
B01J 14/00, B01J 7/02

(21) Application number: **03255245.7**

(22) Date of filing: **22.08.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **06.09.2002 IS 236575**

(71) Applicant: **Hewlett-Packard Development Company, L.P.**
**Houston, TX 77070 (US)**

(72) Inventors:
• **Ord, Jason S.**
**Portland, OR 97212 (US)**
• **Longust, Timothy A.**
**Vancouver, WA 98683 (US)**
• **Roman, Justin**
**Portland, OR 97213 (US)**
• **Shibata, Alan**
**Camas, WA 98607 (US)**

(74) Representative: **Jackson, Richard Eric et al**
**Carpmaels & Ransford,**
**43 Bloomsbury Square**
**London WC1A 2RA (GB)**

(54) **Hydrogen generating apparatus**

(57) A hydrogen generating apparatus (42) includes a chemical container (144), a tubular member (146) disposed at least partially in the chemical container (144), the tubular member (146) having an inlet (148) and an outlet (150), and a catalyst (156) disposed within the tubular member (146).

**EP 1 396 472 A2**

## Description

FIELD OF THE INVENTION

This invention relates to fuel cells. More particularly, this invention relates to a method and apparatus for hydrogen generation for a fuel cell.

BACKGROUND OF THE INVENTION

Over the past century the demand for energy has grown exponentially. With the growing demand for energy, many different energy sources have been explored and developed. One of the primary sources for energy has been, and continues to be, the combustion of hydrocarbons. However, the combustion of hydrocarbons usually results in incomplete combustion and non-combustibles that contribute to smog and other pollutants in varying amounts.

As a result of the pollutants created by the combustion of hydrocarbons, the desire for cleaner energy sources has increased in more recent years. With the increased interest in cleaner energy sources, fuel cells have become more popular and more sophisticated. Research and development on fuel cells has continued to the point where many speculate that fuel cells will soon compete with the gas turbine generating large amounts of electricity for cities, the internal combustion engine powering automobiles, and batteries that run a variety of small and large electronics.

Fuel cells conduct an electrochemical energy conversion of hydrogen and oxygen into electricity and heat. Fuel cells are similar to batteries, but they can be "recharged" while providing power.

Fuel cells provide a DC (direct current) voltage that may be used to power motors, lights, or any number of electrical appliances. There are several different types of fuel cells, each using a different chemistry. Fuel cells are usually classified by the type of electrolyte used. The fuel cell types are generally categorized into one of five groups: proton exchange membrane (PEM) fuel cells, alkaline fuel cells (AFC), phosphoric-acid fuel cells (PAFC), solid oxide fuel cells (SOFC), and molten carbonate fuel cells (MCFC).

PEM Fuel Cells

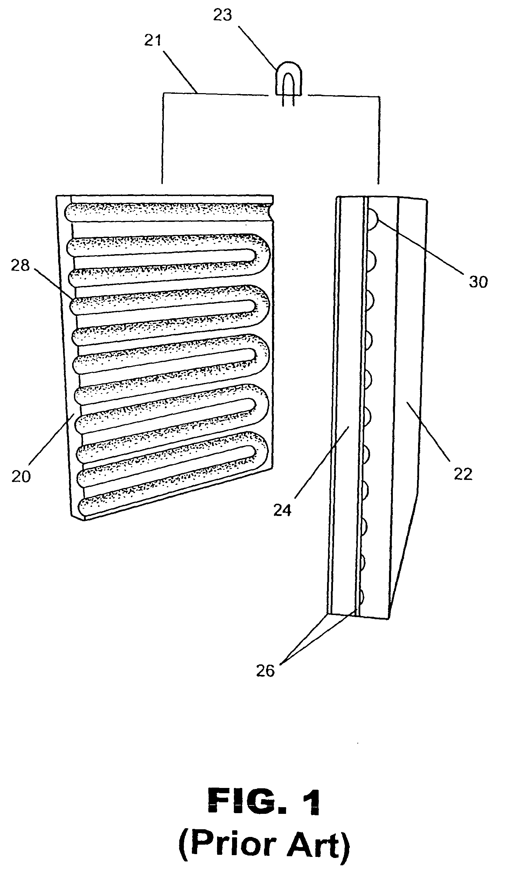

The PEM fuel cells are currently believed to be the most promising fuel cell technology and use one of the simplest reactions of any fuel cell. Referring to FIG. 1, a PEM fuel cell will typically include four basic elements: an anode (20), a cathode (22), an electrolyte (PEM) (24), and a catalyst (26) arranged on each side of the electrolyte (24).

The anode (20) is the negative post of the fuel cell and conducts electrons that are freed from hydrogen molecules such that the electrons can be used in an external circuit (21). The anode (20) includes channels (28) etched therein to disperse the hydrogen gas as evenly as possible over the surface of the catalyst (26).

The cathode (22) is the positive post of the fuel cell, and has channels (30) etched therein to evenly distribute oxygen (usually air) to the surface of the catalyst (26). The cathode (22) also conducts the electrons back from the external circuit to the catalyst, where they can recombine with the hydrogen ions and oxygen to form water. Water is the only by-product of the PEM fuel cell.

The electrolyte (24) is the proton exchange membrane (PEM) (24). The PEM is a specially treated porous material that conducts only positively charged ions. The PEM (24) prevents the passage of electrons.

The catalyst (26) is typically a platinum powder thinly coated onto carbon paper or cloth. The catalyst (26) is usually rough and porous so as to maximize the surface area of the platinum that can be exposed to the hydrogen or oxygen. The catalyst (26) facilitates the reaction of oxygen and hydrogen.

In a working fuel cell, the PEM (24) is sandwiched between the anode (20) and the cathode (22). The operation of the fuel cell can be described generally as follows. Pressurized hydrogen gas ($H_2$) enters the fuel cell on the anode (20) side. When an $H_2$ molecule comes into contact with the platinum on the catalyst (26), it splits into two $H^+$ ions and two electrons ($e^-$). The electrons are conducted through the anode (20), where they make their way through the external circuit (21) that may be providing power to do useful work (such as turning a motor or lighting a bulb (23)) and return to the cathode side of the fuel cell.

Meanwhile, on the cathode (22) side of the fuel cell, oxygen gas ($O_2$) is being forced through the catalyst (26). In some PEM fuel cell systems the $O_2$ source may be air. As $O_2$ is forced through the catalyst (26), it forms two oxygen atoms, each having a strong negative charge. This negative charge attracts the two $H^+$ ions through the PEM (24), where they combine with an oxygen atom and two of the electrons from the external circuit to form a water molecule ($H_2 0$).

The PEM fuel cell reaction just described produces only about 0.7 volts. Therefore, to raise the voltage to a more useful level, many separate fuel cells are often combined to form a fuel cell stack.

PEM fuel cells typically operate at fairly low temperatures (about 80° C/176° F), which allows them to warm up quickly and to be housed in inexpensive containment structures that do not need or include any special materials capable of withstanding the high temperatures normally associated with electricity production.

Hydrogen Generation for Fuel Cells

As discussed above, each of the fuel cells described uses oxygen and hydrogen to produce electricity. The oxygen required for a fuel cell is usually supplied from the air. In fact, for the PEM fuel cell, ordinary air at ambient conditions is pumped into the cathode. However, hydrogen is not as readily available as oxygen.

Hydrogen is difficult to generate, store and distribute. One common method for producing hydrogen for fuel cells is the use of a reformer. A reformer uses hydrocarbons or alcohol fuels to produce hydrogen, which is then fed to the fuel cell. Unfortunately, if the hydrocarbon fuel is gasoline or some of the other common hydrocarbons, $SO_x$, $NO_x$ and other undesirable products are created. Sulfur, in particular, must be removed or it can damage the electrode catalyst. Reformers usually operate at high temperatures as well, which consumes much of the energy of the feedstock material.

Hydrogen may also be created by low temperature chemical reactions utilizing a fuel source in the presence of a catalyst. However, many problems are associated with low temperature chemical reactions for producing hydrogen. One of the problems is the typical requirement for pumps to move the chemical mixture into a reaction chamber filled with a catalytic agent. The use of a pump consumes at least some of the power that the fuel cell is generating (called parasitic power). If the power consumed by the pump becomes too high, the operation of the fuel cell to produce electricity becomes uneconomical.

Another problem with chemical reactions to produce hydrogen is contamination of the catalyst that facilitates the chemical reaction. As the catalyst becomes contaminated, the rate of reaction and the efficiency of the hydrogen production both decrease. Prior to the present invention, there has been no effective method of keeping the catalyst clean during the chemical reaction. Therefore, peak efficiency in prior hydrogen producing reaction has been difficult to maintain.

In addition, in order to most effectively use the hydrogen-bearing chemical solutions to produce hydrogen gas, it is desirable to circulate the solutions to more fully realize the hydrogen available from the solution. However, the parasitic losses associated with dedicating power to the circulation of the solution are prohibitive when trying to efficiently generate hydrogen by current methods.

Further, the chemical mixture provided to the reaction chamber must be accurately metered to facilitate a chemical reaction that will efficiently generate electric power. Accurate metering equipment adds expense, complexity, and sensitivity to the pumping system and increases the parasitic power consumption. Typical fuel cells are also usually orientation-specific, meaning that metering of the chemical mixture can only be done when the fuel cell is in certain orientations. Orientation-specific fuel cell systems limit their usefulness for portable consumer electronics and other devices that may be used in multiple and different orientations.

In addition, another challenge to using fuel cells in portable consumer products such as digital cameras and laptop computers is providing a hydrogen fuel source that is safe and energy-dense. While there have been fuel cell systems such as the PEM fuel cell described above to generate electricity, they are typically not small or dense enough to be portably used in most consumer products.

SUMMARY OF THE INVENTION

The present invention provides, among other things, a hydrogen generating apparatus including a chemical container, a tubular member disposed at least partially in the chemical container, the tubular member having an inlet and an outlet, and a catalyst disposed within the tubular member.

BRIEF DESCRIPTION OF THE DRAWINGS

The foregoing and other features and aspects of the invention will become further apparent upon reading the following detailed description and upon reference to the drawings in which:

FIG. 1 is an unassembled perspective view of a PEM fuel cell apparatus.

FIG. 2 is an overview diagram of a fuel cell apparatus and hydrogen generating system according to one embodiment of the present invention.

FIG. 3 is a diagrammatical view of a hydrogen generator according to one embodiment of the present invention.

FIG. 4 is a diagrammatical view of a hydrogen generator according to another embodiment of the present invention.

FIG. 5 is a diagrammatical view of a hydrogen generator according to another embodiment of the present invention.

FIG. 6 is a perspective view of a hydrogen generator according to an embodiment of the present invention.

FIG. 7 is a cross-sectional perspective of the hydrogen generator according to FIG. 6.

FIG. 8 is a cross-sectional perspective view of a hydrogen generator according to another embodiment of the present invention.

In the drawings, identical reference numbers indicate similar, but not necessarily identical, elements. While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

DETAILED DESCRIPTION OF ILLUSTRATED EMBODIMENTS

Illustrative embodiments of the invention are described below. As will be appreciated by those skilled in the art, the present invention can be implemented in a wide variety of chemical reactions especially those for producing hydrogen for fuel cells. The fuel cell applications include, but are not limited to, PEM fuel cells, AFCs, PAFCs, SOFCs, and MCFCs.

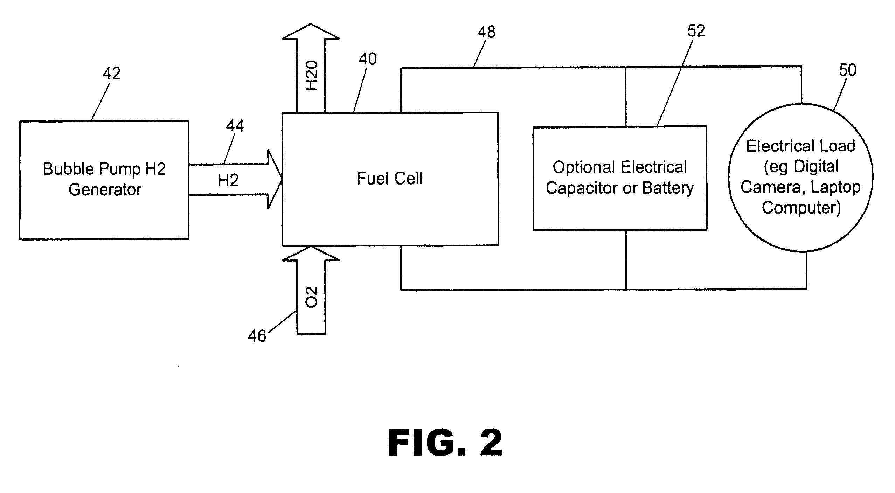

Turning now to the figures, and in particular to FIG. 2, an overview of a fuel cell system according to one embodiment of the present invention is shown. According to the embodiment of FIG. 2, there is a fuel cell (40) in fluid communication with a hydrogen generating apparatus, which, in the present embodiment, is a bubble pump (42). The bubble pump (42) may provide a supply of hydrogen gas along the path represented by an arrow (44). A supply of oxygen that may be provided by ambient air is also in fluid communication with the fuel cell (40) as represented by a second arrow (46).

The fuel cell (40) may provide power via an external circuit (48) to an electrical load (50). Electrical loads may encompass any electrically operated device including, but not limited to, a digital camera, a laptop computer, and other stationary and portable electronics. The external circuit (48) may also be connected to an optional electrical capacitor or battery (52), which is shown in electrical parallel with the fuel cell (40), for providing auxiliary power to the electrical load (50).

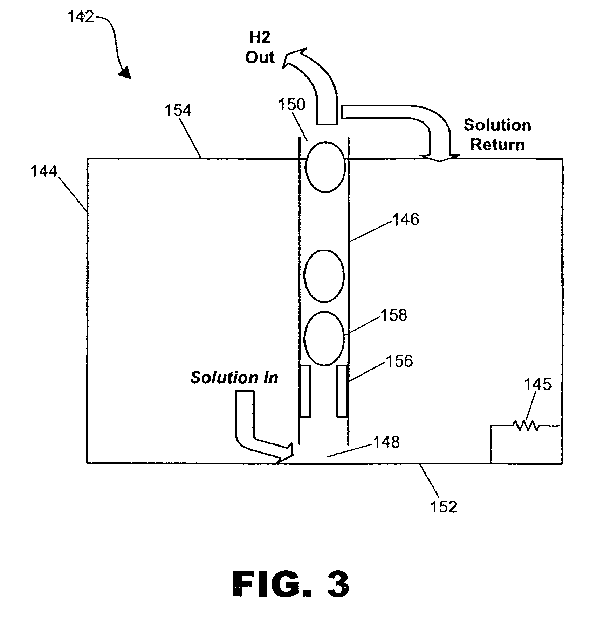

The bubble pump (42) supplies hydrogen gas to the fuel cell (40) and may take many different forms. Referring to FIG. 3, one embodiment of a bubble pump (142) according to the present invention is shown. The bubble pump (142) includes a chemical container such a cylinder (144) for housing a hydrogen-bearing solution. The hydrogen-bearing solution may include, but is not limited to, an aqueous metal hydride such as sodium borohydride ($NaBH_4$) and an amine borane, each of which produce hydrogen gas. The cylinder (144) may be made of metals, plastics, elastomers, ceramics, composites or other materials that are generally capable of containing fluid solutions and are compatible with the reactants of the hydrogen-bearing solution. The cylinder (144) may be flexible or rigid, although in the present embodiment the cylinder (144) is preferably substantially rigid.

Disposed at least partially in the cylinder (144) is a tubular member (146), for example a bubble tube, that extends into the cylinder (144). The bubble tube (146) may be a stand-pipe or other tubular member and may be made of metals, plastics, elastomers, ceramics, composites, or other materials. However, other tubular members may also be used, including tubulars that are non-cylindrical and of regular or irregular cross-section. The bubble tube (146) of the present embodiment is preferably cylindrical and includes an inlet (148) and an outlet (150). The inlet may be arranged near a base (152) of the cylinder (144) and facilitates the passage of the hydrogen-bearing solution into the bubble tube (146). The outlet (150) preferably extends through a wall (154) of the cylinder (144) or beyond a maximum fluid level of the hydrogen-bearing solution contained by the cylinder (144). Alternatively, the outlet (150) may be flush with or below the surface of the wall (154). The bubble tube (146) may be arranged substantially concentric with the cylinder (144), as shown, but this is not necessarily so. The bubble tube (146) may also be arranged at an offset from the center of the cylinder. The bubble tube (146) is shown as distinct from the cylinder (144). However, in some embodiments, the bubble tube (146) may be integral with and/or formed into the cylinder (144).

According to the embodiment of FIG. 3, the bubble tube (146) includes a catalyst (156) disposed therein. The catalyst shown as, and is preferably arranged in, a ring (156) disposed inside and substantially concentric with the bubble tube (146). "Substantially concentric" may include arrangements of the catalyst ring (156) that are flush with the bubble tube (146). The catalyst may also include other alternative arrangements to the ring configuration shown. For example, the catalyst may include one or more high-surface area fins inside the bubble tube (146). The catalyst may also be coated on a screen that may be inserted into the bubble tube (146), or coated directly onto the inside of the bubble tube (146).

The catalyst ring (156) is arranged at the inlet (148) of the bubble tube (146) to increase the rate of reaction of the hydrogen-bearing solution into hydrogen gas. The catalyst ring (156) may include, but is not limited to, a noble metal catalyst such as ruthenium, rhodium, or platinum. The catalyst ring (156) may also include other metals such as nickel. The catalyst ring (156) may, for example, facilitate the reaction of aqueous sodium borohydride solution to release hydrogen gas according to the following chemical equation:

$$NaBH_4 + 2H_2O \rightarrow 4H_2 + NaBO_2 \qquad (1)$$

The bubble pump (142) may also include a resistive heating element (145) disposed in the cylinder (144) for heating the hydrogen-bearing solution contained by the cylinder (144). Preferably, the bubble pump (142) is arranged adjacent to a fuel cell such that heat generated by the fuel cell is transferred to the cylinder (144) to increase the temperature of the hydrogen-bearing solution. However, particularly during fuel cell start-up, it may be desirable to increase the initial temperature of the hydrogen-bearing solution with the resistive heating element (145) to facilitate hydrogen gas generation.

Operation of the bubble pump (142) according to the embodiment of FIG. 3 may be described as follows. A supply of hydrogen-bearing solution such as sodium borohydride is provided to the cylinder (144). The resistive heating element (145) may be turned on to heat the hydrogen-bearing solution. The hydrogen-bearing solution enters the bubble tube (146) though the inlet (148), where the catalyst ring (156) increases a rate of reaction of the hydrogen-bearing solution. As a result, hydrogen bubbles (158) are released from the solution and travel through the bubble tube (146). According to an upright configuration shown, the force of gravity pulls solution into the inlet (148). This, in turn, causes the hydrogen bubbles (158) to float upward past from the catalyst ring and to the outlet (150) of the bubble tube (146). As bubbles rise through the bubble tube (146), fresh solution is drawn into the inlet (148), creating a continuous flow much like a pump. Advantageously, as the hydrogen bubbles float through the catalyst ring (156), they carry with them the reacted solution and any debris that may have collected on the catalyst ring (156). Therefore, the catalyst ring (156) remains clean and effective for a longer period of time than previous catalytic elements used in hydrogen generators using catalysts. As the hydrogen bubbles (158) reach the outlet (150) of the bubble tube (146), the debris and solution spill over into the cylinder (144), advantageously circulating the solution without requiring the addition of adding any external energy to the bubble pump. The hydrogen bubbles (158) may then accumulate and/or be directed to a fuel cell for operation as described above. As the fuel cell becomes operational, the resistive heating element (145) may be turned off as the heat from the operating fuel cell replaces the heat initially provided by the resistive heating element.

It will be understood by those of skill in the art having the benefit of this disclosure that the reaction rate of the bubble pump for producing hydrogen gas may be controlled by, among other things, adjusting the size of the inlet (148), changing the diameter of the bubble tube (146), changing the diameter of the bubble tube (146) along its length, and controlling the hydrogen gas backpressure. In addition, multiple bubble tubes may be used, with the number of bubble tubes (146) being adjusted up or down to further control the hydrogen gas production rate. In the embodiment shown, there is the first bubble tube (146) and an optional second bubble tube (147), but one or more additional bubble tubes (146) may also be added to the cylinder (144) as desired.

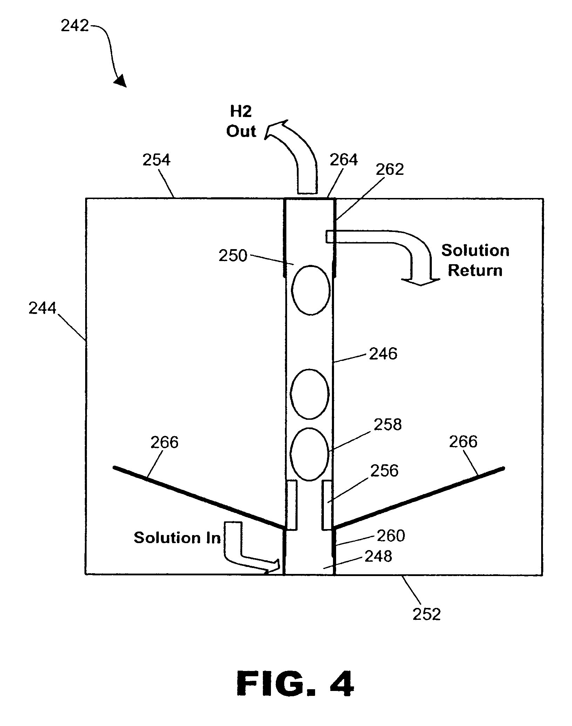

The bubble pump of FIG. 3 may be orientation-specific. Because of the reliance on gravity for the generation of hydrogen bubbles (158), the arrangement of FIG. 3 is preferably maintained in a substantially upright position during operation. "Substantially upright" includes arrangements that are at least a few degrees tilted from horizontal, but that still allow gravity to pull solution into the inlet (148) of the bubble tube (146). However, another embodiment of a bubble pump (242) as shown in FIG. 4 is orientation-independent. According to the embodiment of FIG. 4, the bubble pump (242) includes a chemical container such a cylinder (244) for housing a hydrogen-bearing solution. The cylinder (244) may include a wide variety of materials according to the reactants used to produce the hydrogen gas. As with the cylinder (144) of the embodiment of FIG. 3, the cylinder (244) may be flexible or rigid, although in the present embodiment the cylinder (244) is preferably rigid.

Disposed at least partially in the cylinder (244) is a tubular member (246), for example a bubble tube, that extends into the cylinder (244). The bubble tube (246) may be a stand-pipe or other tubular member and may be made of metals, plastics, elastomers, ceramics, composites, or other materials. However, other tubular members may also be used, including tubulars that are non-cylindrical and of regular or irregular cross-section. The bubble tube (246) of the present embodiment is cylindrical and includes an inlet (248) and an outlet (250). The inlet may be arranged near a base (252) of the cylinder (244) and facilitates the passage of hydrogen-bearing solution into the bubble tube (246). The outlet (250) may extend through a wall (254) of the cylinder (244) or beyond a maximum fluid level of the hydrogen-bearing solution contained by the cylinder (244). Alternatively, the outlet (250) may be flush with or below the surface of the wall (254). The bubble tube (246) may be arranged substantially concentric with the cylinder (244), as shown, but this is not necessarily so. The bubble tube (246) may also be arranged at an offset from the center of the cylinder. The bubble tube (246) is shown as distinct from the cylinder (244), however, in some embodiments, the bubble tube (246) may be integral with and/or formed into the cylinder (244).

As with the embodiment of FIG. 3, the bubble tube (246) of FIG. 4 includes a catalyst disposed therein. The catalyst is shown as, and is preferably formed as, a ring (256) disposed substantially concentric with and inside the bubble tube (246). The catalyst ring (256) is arranged at the inlet (248) the bubble tube (246) to increase the rate of reaction of the hydrogen-bearing solution into hydrogen gas. The catalyst ring (246) may include, but is not limited to, a noble metal catalyst such as ruthenium, rhodium, or platinum. The catalyst ring (246) may also include other metals such as nickel.

The bubble tube (246) may also include a first hydrophilic screen (260) covering the inlet (248) of the bubble tube (246). The first hydrophilic screen (260) may extend cylindrically as shown between the inlet (248) of the bubble tube (246) and a base surface (252) of the cylinder (244). Alternatively, the first hydrophilic screen (260) may cover the inlet (248) as a cap. The first hydrophilic screen (260) readily allows the passage of liquid solutions therethrough. However, the first hydrophilic screen (260) selectively prohibits the passage of hydrogen gas via capillary resistance.

The first hydrophilic screen (260) may include a stainless steel filter screen. The effective pore size of the first hydrophilic screen (260) is selected to balance pressure drop and bubble pressure to ensure liquid/gas separation. It is within the purview of the skilled artisan having the benefit of this disclosure to select an appropriate hydrophilic screen pore size according to the specific needs of the application. For example a stainless steel filter screen may be sized according to the following equation:

$$1.\ D_{eff} = 4\sigma * \cos\theta / \Delta P, \qquad (2)$$

where

$D_{eff}$ is the hydrophilic screen's effective pore size diameter,
$\sigma$ is the surface tension expressed in energy per unit area,
$\theta$ is the wetting contact angle, and
$\Delta P$ is the not to exceed design pressure differential across the hydrophilic screen for the reactor, below which hydrogen gas will not pass through the hydrophilic screen.

In one embodiment according to the present invention, use of equation (2) above may yield an effective pore size of approximately 6 $\mu$m for some applications, but this dimension is not so limited. With proper effective pore sizing, all, or substantially all, of the produced hydrogen gas can be prevented from passing through the first hydrophilic screen (260).

The bubble tube (246) may also include a separator at the outlet (250) to separate hydrogen gas bubbles from liquid solution. The separator may include a second hydrophilic screen (262) arranged similarly to the first hydrophilic screen (260), but at the outlet (250). As discussed above, the second hydrophilic screen (262) may also be sized to permit the passage of liquids but block the passage of hydrogen gas. Accordingly, hydrogen gas produced in the bubble tube (246) may not pass through the second hydrophilic screen (262), but the used solution in the bubble tube may pass the second hydrophilic screen (262) and recirculate through the cylinder (244). The second hydrophilic screen (262) may in some embodiments be part of the first hydrophilic screen (260), with the first hydrophilic screen (260) extending to the position shown for the second hydrophilic screen (262). The first and second hydrophilic screens (260/262) may only prevent the passage of hydrogen gas when they are wetted. Accordingly, the cylinder (244) may be completely filled with liquid solution.

The separator may also include a hydrophobic membrane (264) for selectively allowing the passage of hydrogen gas. While the hydrophobic membrane (264) allows the passage of hydrogen and other gases, liquids tend not to pass through the hydrophobic membrane (264). Therefore, the hydrophobic membrane (264) and hydrophilic screen (262) advantageously provide separation paths for the resultant liquid/gas mixture of hydrogen and waste products produced from the hydrogen-bearing solution, such as aqueous sodium borohydride.

The hydrophobic membrane (264) may include Goretex®, Celgard®, or other readily available materials.

A collector (266) may also be disposed around the base of the bubble tube, as shown in FIG. 4. This collector (266) is preferably a cone that surrounds the base of the tube (246) and that opens toward the outlet (250) of the bubble tube (246). As hydrogen bubbles exit the tube (246) and the solution is recirculated, particulate matter and other contaminates may be carried out of the tube (246) and then settle toward the base (252) of the cylinder (244). This matter may tend to clog the inlet (248) of the tube (246), for example, collecting in the hydrophilic screen (262). To alleviate this problem, the collector (266) is disposed around the tube (246) above the inlet (248) to collect any matter or contaminants that would otherwise tend to clog the inlet (248).

Operation of the bubble pump (242) according to the embodiment of FIG. 4 may be described as follows. A supply of hydrogen-bearing solution such as sodium borohydride is provided into the cylinder (244). The hydrogen-bearing solution passes through the first hydrophilic screen (260) and enters the bubble tube (246) though the inlet (248). The hydrogen-bearing solution engages the catalyst ring (256), which increases a rate of reaction of the hydrogen-bearing solution. Hydrogen bubbles (258) are then produced from the solution in the bubble tube (246). As the hydrogen bubbles (258) are produced from the solution, they will tend to migrate either toward the inlet (248) or the outlet (250) of the bubble tube depending on the orientation of the bubble pump (242). When the bubble pump (242) is in a substantially upright orientation in which the hydrogen bubbles (258) tend to migrate to the outlet (250), the hydrogen bubbles float past the catalyst ring (256) and to the outlet (250). The hydrogen bubbles are prevented from reentering the cylinder (244) by the second hydrophilic screen (262), but the spent hydrogen-bearing solution and other products pass though the hydrophilic screen (262) and back into the cylinder (244), where they may be recirculated or disposed of. The hydrogen bubbles may, however, pass through hydrophobic membrane (264), where they may be supplied to a fuel cell. The spent hydrogen-bearing solution and other products are prevented from passing though the hydrophobic membrane (264).

When the bubble pump (242) is in an orientation in which the hydrogen bubbles (258) tend to migrate to the inlet (248), the hydrogen bubbles (258) are blocked from passage back into the cylinder by the first hydrophilic screen (260). Therefore, as the chemical reaction progresses, the pressure in the bubble tube (246) may increase and eventually force the hydrogen bubbles toward the outlet (250). When the hydrogen bubbles reach the outlet (250), they may pass though the hydrophobic membrane (264), but they may not pass through the second hydrophilic screen (262).

Accordingly, the addition of a separator at the outlet (250) and the first hydrophilic screen (260) provide for an orientation independent bubble pump (242). As with the bubble pump (142) of FIG. 3, hydrogen produced in the bubble tube (246) may accumulate and/or be provided to a fuel cell.

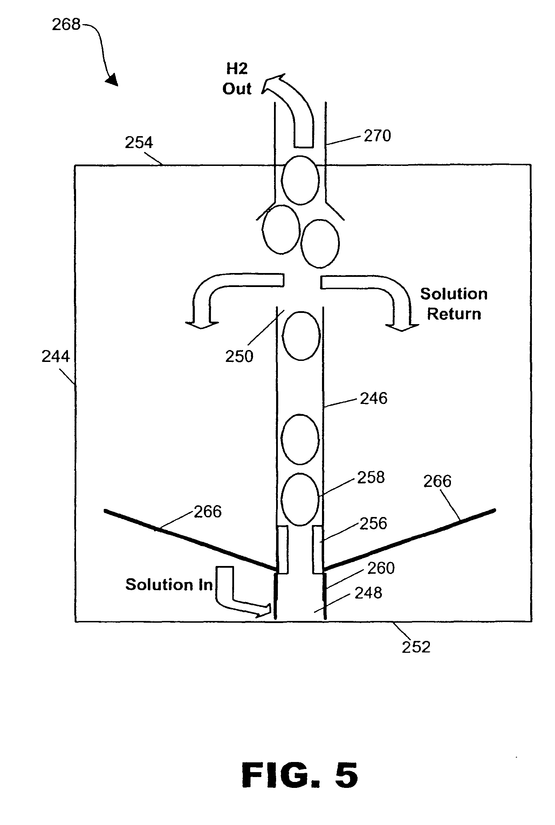

FIG. 5 illustrates another embodiment of the present invention similar to that shown and described above in connection with FIG. 4. However, in the embodiment of FIG. 5, the bubble tube (246) does not extend throughout the cylinder (244). Rather, in the hydrogen generator (268) of FIG. 5, the outlet (250) of the bubble tube (246) is positioned inside the cylinder (244) and releases hydrogen bubbles into the interior of the cylinder (244). As the bubbles are released, the solution is recirculated. The bubbles float through a cylinder output (270) and can then be directed to a fuel cell or put to some other use. The embodiment of FIG. 5 also preferably includes a collector (266) for collecting sludge and contaminants that would otherwise tend to clog the inlet (248) of the bubble tube (246).

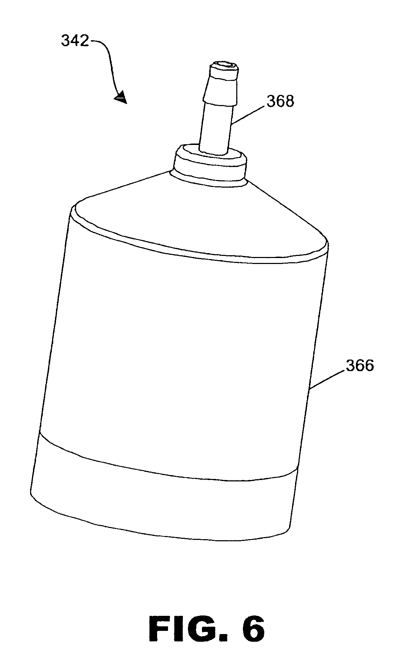

Referring next to FIG. 6, a perspective view is shown of one embodiment of a bubble pump hydrogen cartridge (342) according to the present invention. The bubble pump hydrogen cartridge (342) may include the elements of the bubble pumps (142/242) described with reference to FIGS. 3 and 4. According to the embodiment of FIG. 6, the cylinder of FIGs. 3 and 4 (144/244) may comprise a shell (366). Further, the shell (366) may include a fitting (368) to provide a hydrogen gas path that can be engaged with an inlet of a fuel cell.

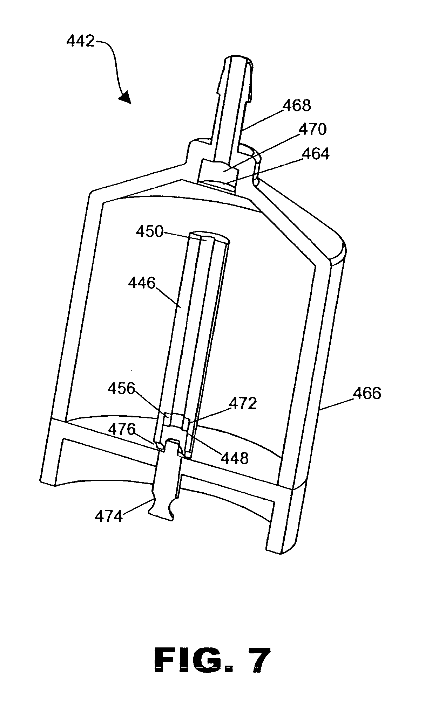

Turning next to FIG. 7, an embodiment of a bubble pump hydrogen cartridge (442) is shown in cross-section. The embodiment of FIG. 7 is similar to the embodiment described with reference to FIGs. 3 and 5. However, the embodiment of FIG. 7 includes a hydrophobic membrane (464) at a fitting inlet (470). The hydrophobic membrane operates in the same or identical manner as the hydrophobic membrane (264) described with reference to FIG. 4 to allow the passage of hydrogen gas produced in a bubble tube (446) to pass into a fitting (468) via the fitting inlet (470). In addition, the bubble tube (446) of the bubble pump hydrogen cartridge (442) includes a recess (472) receptive of a catalyst ring (456) such that the catalyst ring (456) is substantially flush with the bubble tube (446).

The embodiment of FIG. 7 includes a plug (474) for opening and closing inlet ports (476) disposed at a first end (448) of the bubble tube (446). The inlet ports (476) allow hydrogen-bearing solution contained by the cylinder or shell (466) to enter the bubble tube (446) when the plug (474) is in the open position shown. The plug (474) may be movable between the open position shown and a closed position blocking passage to the inlet ports (476). In addition, the plug may be positioned in any number of intermediate positions to adjust the flow of hydrogen-bearing solution into the bubble tube (446). The plug (474) may be made of plastics, elastomers, or other materials and may be operational by hand or by a powered actuator such as a solenoid.

The plug (474) may be used to start and stop the chemical reaction producing hydrogen gas. Accordingly, the plug (474) may completely seal off the catalyst ring (456) (or other catalyst configuration) when closed. The plug (474) may also scrape the catalyst ring (456) clean each time it is actuated.

Operation of the bubble pump hydrogen cartridge (442) according to the embodiment of FIG. 7 may be described as follows. A supply of hydrogen-bearing solution such as sodium borohydride is provided into the shell (466). The hydrogen-bearing solution enters the bubble tube (446) though the inlet ports (476) when the plug (474) is in the open position shown. The hydrogen-bearing solution encounters the catalyst ring (456) which increases a rate of reaction of the hydrogen-bearing solution and produces hydrogen bubbles from the solution in the bubble tube (446). According to the substantially upright configuration shown, the force of gravity causes the hydrogen bubbles to float past the catalyst ring (456) and to an outlet (450) of the bubble tube (446). Advantageously, as the hydrogen bubbles float through the catalyst ring (456), they carry with them the reacted solution and debris that has collected on the catalyst ring (456). Therefore, the catalyst ring (456) remains clean and effective for a longer period of time than catalytic agents in previous hydrogen generators. As the hydrogen bubbles reach the outlet (450) of the bubble tube (446), the debris and solution spill over into the shell (466), advantageously circulating the solution without requiring the application of any external energy to the bubble pump. The hydrogen bubbles may then accumulate and/or pass through the hydrophobic membrane (464) to be directed to a fuel cell via the fitting (468).

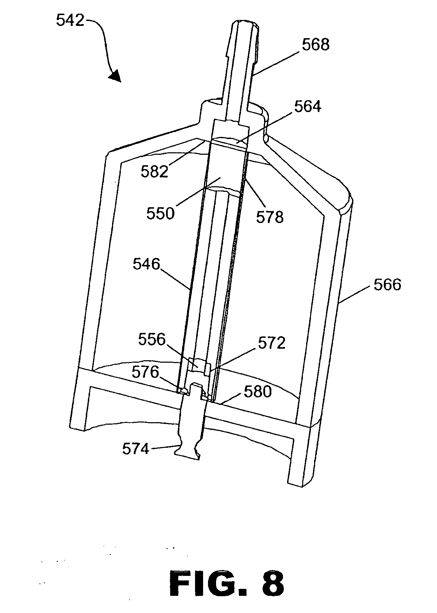

Referring next to FIG. 8, another embodiment of a bubble pump hydrogen cartridge (542) is shown. The embodiment of FIG. 8 is similar to the embodiment described with reference to FIGs. 4 and 5. The bubble pump hydrogen cartridge (542) includes a shell (566) for containing a hydrogen-bearing solution and a bubble tube (546) disposed in the shell (566). The bubble tube (546) includes a catalyst ring (556) that is preferably disposed in a recess (572) of the bubble tube (546) such that the catalyst ring (556) is concentric and substantially flush with the bubble tube (546). In some embodiments, however, the catalyst ring (556) is not substantially flush with the bubble tube (546). The bubble pump hydrogen cartridge (542) also includes a fitting (568) configured to mate with a fuel cell apparatus and through which hydrogen gas is provided to the fuel cell.

As with the embodiment of FIG. 7, the bubble pump hydrogen cartridge (542) of FIG. 8 includes a plug (574) for selectively opening and closing ports (576) between the bubble tube (546) and the hydrogen-bearing solution contained by the shell (566). The plug may be operated between intermediate positions as well as the open and closed positions, and may be operated by hand or by a powered actuator such as a solenoid.

The bubble tube (546) of FIG. 8 may also include a hydrophilic screen (578) for substantially restricting the passage of hydrogen or other gases. The hydrophilic screen (578) may be sized according to the parameters discussed above to advantageously allow the bubble pump hydrogen cartridge (542) to operate in an orientation-independent manner. The hydrophilic screen (578) may extend the full length of the bubble tube (546) and to the first and second extents (580 and 582) of the shell (566) as shown, or the hydrophilic screen (578) may be separated into a first and second screens, with the first screen arranged at the inlet ports (576) and the second screen arranged at the outlet (550) of the bubble tube (546). The hydrophilic screen (578), in combination with a hydrophobic membrane (564), functions as a liquid/gas separator for hydrogen gas produced in the bubble tube from the hydrogen-bearing solution contained by shell (566).

Operation of the bubble pump hydrogen cartridge (542) according to the embodiment of FIG. 8 may be described as follows. A supply of hydrogen-bearing solution such as sodium borohydride is provided to the shell (566). With the plug (574) in the open position, the hydrogen-bearing solution passes through the hydrophilic screen (578) and enters the bubble tube (546) though the inlet ports (576). The hydrogen-bearing solution engages the catalyst ring (556), which increases a rate of reaction of the hydrogen-bearing solution and generates hydrogen bubbles from the solution in the bubble tube (546). As the hydrogen bubbles come out of the solution, they will tend to migrate either toward the inlet ports (576) or the outlet (550) of the bubble tube (546), depending on the orientation of the bubble pump hydrogen cartridge (542). When the bubble pump hydrogen cartridge (542) is in a substantially upright orientation in which the hydrogen bubbles tend to migrate to the outlet (550), the hydrogen bubbles float through the catalyst ring (556) and to the outlet (550). The hydrogen bubbles are prevented from reentering the shell (566) by the hydrophilic screen (578), but the spent hydrogen-bearing solution and other products pass though the hydrophilic screen (578) and back into the shell (566) where they may be recirculated or disposed of. The hydrogen bubbles may, however, pass through the hydrophobic membrane (564), where they may be supplied to a fuel cell via the fitting (568). The spent hydrogen-bearing solution and other products are prevented from passing though the hydrophobic membrane (564). The hydrophilic screen (578) may only prevent the passage of hydrogen gas when it is wetted. Accordingly, the cartridge (542) may be completely filled with hydrogen-bearing solution.

When the bubble pump (542) is in an orientation in which the hydrogen bubbles tend to migrate to the ports (576), the hydrogen bubbles are blocked from passage back into the shell (566) by the hydrophilic screen (578). Therefore, as the chemical reaction progresses, the pressure in the bubble tube (546) may increase and eventually force the hydrogen bubbles toward the outlet (550). When the hydrogen bubbles reach the outlet (550), they may pass though the hydrophobic membrane (564) and into the fitting (568), but they may not pass through the hydrophilic screen (578). Accordingly, the hydrophilic screen (578) and the hydrophobic membrane (562) function as a separator at the outlet (550) of the bubble tube (546) and provide for an orientation independent bubble pump hydrogen cartridge (542).

As with the bubble pump hydrogen cartridge (442) of FIG. 7, hydrogen produced in the bubble tube (546) may accumulate and/or be provided to a fuel cell.

The preceding description has been presented only to illustrate and describe the invention. It is not intended to be exhaustive or to limit the invention to any precise form disclosed. Many modifications and variations are possible in light of the above teaching.

The embodiments shown were chosen and described in order to best explain the principles of the invention and its practical application. The preceding description is intended to enable others skilled in the art to best utilize the invention in various embodiments and with various modifications as are suited to the particular use contemplated. It is intended that the scope of the invention be defined by the following claims.

**Claims**

1. A hydrogen generating apparatus (42) comprising:

    chemical container (144);
    a tubular member (146) disposed at least partially in said chemical container (144), the tubular member (146) having an inlet (148) and an outlet (150); and
    a catalyst (156) disposed within said tubular member (146).

2. The hydrogen generating apparatus of claim 1, further comprising a hydrophilic screen (260) covering said inlet (148).

3. The hydrogen generating apparatus of claim 1, further comprising a separator at said outlet (150).

4. The hydrogen generating apparatus of claim 3, wherein said separator further comprises a hydrophobic membrane (264) at said outlet (150).

5. The hydrogen generating apparatus of claim 4, wherein said separator further comprise a hydrophilic screen (262) at said outlet.

6. The hydrogen generating apparatus of claim 1, wherein said catalyst (156) further comprises a ring of catalytic material disposed within said tubular member (146).

**7.** A method of producing hydrogen comprising passing a hydrogen-bearing solution through a tubular member (146) at least partially housed within a solution container (144), wherein said tubular member (146) comprises a catalyst (156) disposed therein.

**8.** The method of claim 7, further comprising separating hydrogen gas produced in said tubular member (146) from said hydrogen-bearing solution.

**9.** The method of claim 8, further comprising screening an inlet and an outlet (150) of said tubular member (146).

**10.** The method of claim 7, further comprising cleaning said catalyst by passing hydrogen bubbles produced in said tubular member (146) by said catalyst (156).

# FIG. 1
## (Prior Art)

**FIG. 2**

EP 1 396 472 A2

142

H2
Out

154    150    Solution
Return

144

146

158

156

Solution In

145

148

152

# FIG. 3

**FIG. 4**

**FIG. 5**

342

368

366

# FIG. 6

FIG. 7

FIG. 8